# EUROPÄISCHE PATENTANMELDUNG

(11) **EP 3 611 775 A1**
(43) Veröffentlichungstag der Anmeldung: **19.02.2020**
(21) Anmeldenummer: 19000369.9
(22) Anmeldetag: 09.08.2019
(51) Int. Cl.: H01M 2/02, H01M 10/52

(54) **BATTERIEZELLE MIT EINER UMHÜLLUNG AUS EINEM EINSTÜCKIGEN GEFALTETEN ZUSCHNITT AUS EINER ALUMINIUM-VERBUNDFOLIE**

(30) Priorität: 14.08.2018 DE 102018006416
(71) Anmelder: Custom Cells Itzehoe GmbH, 25524 Itzehoe (DE)
(72) Erfinder: Wolter, Christopher, 22529 Hamburg (DE); Dohrmann, Michael, 25524 Itzehoe (DE); Strack, Marius, 25524 Itzehoe (DE); Reyes Jimenez, Antonia, 25524 Itzehoe (DE); Permien, Stefan, 25335 Elmshorn (DE)
(74) Vertreter: Thomas, Götz

(57) **Zusammenfassung**

Die Erfindung betrifft eine Batteriezelle (10) mit einer Mehrzahl von Elektroden (18, 20) und zwischen den Elektroden (18, 20) angeordneten Separatoren (22), die einen quaderförmigen Elektrodenstapel (14) bilden, einer den Elektrodenstapel (14) umgebenden, aus einem einzigen ebenen Zuschnitt (30) einer faltbaren AluminiumVerbundfolie gefalteten Umhüllung (12), sowie zwei Anschlussfahnen (16), die über eine (26) von sechs paarweise entgegengesetzten Stapelseiten (24, 24, 26, 26, 28, 28) des Elektrodenstapels (14) überstehen und nebeneinander aus der Umhüllung (12) ragen, wobei mindestens gegen einen Teil der sechs Stapelseiten ein einziger ebener rechteckiger Seitenwandteil der Umhüllung (12) anliegt, dessen Abmessungen jeweils den Abmessungen der gegenüberliegenden Stapelseite entsprechen. Erfindungsgemäß liegt gegen fünf (24, 24, 26, 28, 28) der sechs Stapelseiten (24, 24, 26, 26, 28, 28) jeweils ein einziger ebener rechteckiger Seitenwandteil (74, 74, 76, 78, 78) der Umhüllung (12) an, dessen Abmessungen den Abmessungen der gegenüberliegenden Stapelseite (24, 24, 26, 28, 28) entsprechen.

## Beschreibung

Die Erfindung betrifft eine Batteriezelle gemäß dem Oberbegriff des Anspruchs 1 und insbesondere eine Lithium-Ionen-Zelle mit einer Umhüllung aus einem faltbaren Material. Die Erfindung betrifft weiter ein Verfahren zur Herstellung einer solchen Batteriezelle gemäß dem Oberbegriff des Anspruchs 11.

Viele wieder-aufladbare Batterien für mobile Anwendungen, wie Mobiltelefonen, Laptops, Fahrzeugbatterien für Hybrid-, Plug-In-Hybrid- oder Elektro-Fahrzeuge, bestehen aus einer oder mehreren Batteriezellen, augenblicklich meist Li-Ionen-Zellen. Die Batteriezellen wiederum bestehen aus einer Mehrzahl von abwechselnd übereinander gestapelten negativen und positiven Elektroden sowie Separatoren, die jeweils zwischen benachbarten Elektroden angeordnet sind. Die Elektroden und die Separatoren weisen in der Regel etwa dieselben Abmessungen auf, so dass ein allgemein quaderförmiger Elektrodenstapel gebildet wird. Dieser Stapel wird bei sogenannten Pouch-Zellen mit einer Umhüllung aus einer Aluminium-Verbundfolie versehen.

Zur Herstellung der Umhüllung wird die Aluminium-Verbundfolie in vielen Fällen durch Tiefziehen verformt, um sie an die Form des Stapels anzupassen. Batteriezellen mit solchen Umhüllungen sind zum Beispiel in der EP 2 988 344 A1 und der EP 3 109 920 A1 offenbart.

Tiefgezogene Umhüllungen haben jedoch einige Nachteile: Durch das Tiefziehen der Umhüllung ist eine maximale Stapelhöhe vorgegeben. Da der Trend zu höheren Elektrodenstapeln geht, müssen die vertieften Bereiche der Verbundfolie zudem künftig tiefer gezogen werden. Dadurch kommt es zum ungewollten Ausdünnen und ggf. zum Reißen der Verbundfolie. Außerdem steht bei tiefgezogenen Umhüllungen an vier der sechs Stapelseiten ein umlaufender Steg nach außen über. Dieser Steg ist hinderlich, wenn die Batteriezellen unter beengten Platzverhältnissen untergebracht werden müssen, weil er eine platzsparende Unterbringung erschwert. Auch eine Kühlung der Batteriezellen mit Kühlkörpern oder in Leitungen zirkulierender Kühlflüssigkeit wird durch den überstehenden Steg erschwert, weil dieser eine Annäherung der Kühlkörper oder Leitungen an die Zellen behindert. Zwar können geradlinige Teilstücke des Stegs gegen einen benachbarten Seitenwandteil der Umhüllung gefaltet werden, jedoch bereitet das Heranfalten an den Ecken des Stegs Schwierigkeiten.

Um dies zu vermeiden, sind aus der WO 01/28007 A1 bereits eine Batteriezelle und ein Verfahren der eingangs genannten Art bekannt, wo die Umhüllung aus einem einzigen ebenen Zuschnitt einer biegsamen Aluminium-Verbundfolie besteht. Der Zuschnitt wird dort zu einem beutelförmigen Behälter gefaltet, dessen offenes Ende nach dem Einsetzen des Elektrodenstapels und dem Befüllen mit einem Elektrolyten an der Seite der einseitig über Stapel überstehenden Anschlussfahnen verschlossen wird, die nach der Fertigstellung nebeneinander aus der Umhüllung herausragen. Gegen die zu den Anschlussfahnen entgegengesetzte Unterseite des Stapels sowie gegen zwei entgegengesetzte, von der obersten und untersten Elektrode des Stapels gebildete Breitseiten des Stapels liegt jeweils ein einziger ebener rechteckiger Seitenwandteil der Umhüllung an, dessen Abmessungen den Abmessungen der gegenüberliegenden Stapelseite entsprechen. An jedem der entgegengesetzten Stirnseiten des Stapels befindet sich jedoch ein Seitenwandteil der Umhüllung, über den längs eine mittige Siegelnaht hinweg verläuft. Wegen einer W-Faltung des Bodens und des oberen Endes der Umhüllung ist die Aluminium-Verbundfolie außerdem entlang der Mitte dieser Siegelnaht einlagig und entlang ihrer Enden doppellagig. Dadurch teilt sich die mittige Siegelnaht zweimal, was zu einer unvollständigen Versiegelung und damit zu einer Undichtigkeit der Umhüllung führen kann. Da insgesamt vier solche Stellen vorhanden sind, steigt die Wahrscheinlichkeit einer solchen Undichtigkeit.

Wegen der besonderen Art der Faltung der Umhüllung werden zur Herstellung der bekannten Batteriezellen außerdem spezielle Maschinen benötigt, was bei den bisher eher geringen Stückzahlen nicht wirtschaftlich ist, so dass der bekannten Batteriezelle kein kommerzieller Erfolg beschieden war.

Ausgehend hiervon liegt der Erfindung die Aufgabe zugrunde, eine Batteriezelle und ein Verfahren der eingangs genannten Art dahingehend zu verbessern, dass die Wahrscheinlichkeit von Undichtigkeiten minimiert und die Umhüllung mindestens zum Teil auf bereits vorhandenen, ggf. etwas modifizierten Maschinen hergestellt werden kann.

Diese Aufgabe wird bei der erfindungsgemäßen Batteriezelle dadurch gelöst, dass gegen fünf der sechs Stapelseiten jeweils ein einziger ebener rechteckiger Seitenwandteil der Umhüllung anliegt, wobei die Abmessungen von jedem dieser Seitenwandteile den Abmessungen der gegenüberliegenden Stapelseite entsprechen.

Bei dem erfindungsgemäßen Verfahren wird die Aufgabe dadurch gelöst, dass beim Formen des Behälters gegenüber von fünf der sechs Stapelseiten jeweils ein einziger ebener rechteckiger Seitenwandteil der Umhüllung angeordnet wird, dessen Abmessungen nach der Fertigstellung der Batteriezelle den Abmessungen der gegenüberliegenden Stapelseite entsprechen.

Bei den fünf Seitenwandteilen handelt es sich um diejenigen Seitenwandteile, die nach dem Formen des Behälters dessen Boden und dessen vier Seitenwände bilden bzw. denjenigen Stapelseiten gegenüberliegen, über die keine Anschlussfahnen überstehen.

Durch die erfindungsgemäße Merkmalskombination werden zwei Vorteile erzielt: Zum einen liegen fünf von sechs Stapelseiten die ebenen Innenseiten oder Innenflächen einteiliger Seitenwandteile gegenüber, über die keinerlei Siegelnähte hinweg verlaufen, vor allem keine sich teilenden Siegelnähte zwischen einem einlagigen und einem doppellagigen Teil der Aluminium-Verbundfolie der Umhüllung.

Dadurch können an diesen Seiten jegliche Dichtigkeitsprobleme sicher vermieden werden.

Zum anderen kann gemäß einer bevorzugten Ausgestaltung der Erfindung der Folienzuschnitt zum Formen des Behälters in oder durch einen Schacht gedrückt werden, um vier der fünf Seitenwandteile aufzurichten, d.h. in Bezug zum Boden des Behälters senkrecht auszurichten. Dazu können herkömmliche, ggf. etwas modifizierte Maschinen verwendet werden, wie sie zum Aufrichten von Faltschachteln verwendet werden. Beispiele derartiger Maschinen und ihrer Funktionsweise finden sich unter
www.youtube.com/watch?v=04BAti3sXcM,
www.youtube.com/watch?v=Tmft5yShYvA und
www.youtube.com/watch?v=UlyFLxLk1UU.

Eine bevorzugte Ausgestaltung des erfindungsgemäßen Verfahrens sieht dabei vor, dass der Elektrodenstapel bereits beim Formen des Behälters mit in den Schacht eingeführt wird, um ihn in den Behälter einzusetzen. Zu diesem Zweck kann der Elektrodenstapel zum Beispiel in einen nach unten offenen Stempel eingesetzt werden, der den Aluminium-Verbundfolienzuschnitt beim Formen des Behälters in oder durch den Schacht drückt, wobei der Elektrodenstapel im Behälter zurückbleibt, wenn der Stempel wieder nach oben aus dem Behälter herausgezogen wird.

Gemäß einer weiteren bevorzugten Ausgestaltung der Erfindung weist der Aluminium-Verbundfolienzuschnitt zur Ausbildung der fünf ebenen rechteckigen Seitenwandteile fünf kreuzförmig angeordnete ebene rechteckige Felder auf, d.h. ein mittiges Feld und vier paarweise an den entgegengesetzten Seiten des mittigen Feldes angeordnete Seitenfelder. Die Abmessungen der jeweils entgegengesetzten Seitenfelder sind dabei identisch.

Die von Teilen dieser Seitenfelder gebildeten Seitenwandteile sind auf ihrer gesamten Fläche einlagig und weisen keine über sie hinweg verlaufenden Siegelnähte auf, insbesondere keine sich teilenden Siegelnähte. Das Verbinden benachbarter Seitenwandteile erfolgt vorzugsweise entlang von vier parallelen Kanten des Elektrodenstapels.

Gemäß einer weiteren bevorzugten Ausgestaltung der Erfindung werden dort zum Verbinden dreieckige Hälften von zwischen benachbarten Seitenfeldern befindlichen und nachfolgend als Eckfelder bezeichneten quadratischen Feldern des Aluminium-Verbundfolienzuschnitts übereinandergelegt und an ihren Innenseiten durch Wärmezufuhr und Andruck von außen entlang von Siegelnähten miteinander verschweißt.

Um dies zu ermöglichen, besteht die Innenseite des Aluminium-Verbundfolienzuschnitts zweckmäßig aus einem thermoplastischen Kunststoff, vorzugsweise Polypropylen (PP) oder Polyethylen (PE), der durch lokale Zufuhr von Wärme zur Außenseite des Aluminium-Verbundfolienzuschnitts lokal geschmolzen werden kann.

Gemäß einer weiteren bevorzugten Ausgestaltung der Erfindung werden beim Verschweißen der dreieckigen Eckfeldhälften doppellagige seitliche Überstände gebildet, die entlang der vier parallelen Kanten des Elektrodenstapels nach außen überstehen. Die Überstände werden vorzugsweise beschnitten und von außen her in eine Anlageposition gefaltet, in der sie gegen einen der benachbarten Seitenwandteile der Umhüllung anliegen. Durch diese Maßnahme werden die Überstände parallel zu diesen Seitenwandteilen ausgerichtet und stehen nicht mehr nach außen ab. Da die Aluminiumschicht des Folienzuschnitts weitgehend plastisch verformbar ist, bleiben die Überstände danach in ihrer Anlageposition.

Die seitlichen Überstände werden vorteilhaft so beschnitten, dass jeder Überstand von einer Schnittlinie begrenzt wird, die parallel zur benachbarten Kante des Elektrodenstapels verläuft. An dem zum Boden des Behälters benachbarten Ende wird jeder seitliche Überstand durch eine schräge Falzlinie begrenzt, die vor dem Falten des Folienzuschnitts diagonal über eines der Eckfelder verläuft.

Während es grundsätzlich möglich ist, sämtliche Überstände sofort nach dem Versiegeln, d.h. nach dem Verschweißen der Innenseiten der jeweils gegenüberliegenden Eckfeldhälften, zu beschneiden, sieht eine weitere vorteilhafte Ausgestaltung der Erfindung vor, einen oder mehrere Überstände erst nach der erstmaligen Inbetriebnahme der Batteriezelle zu beschneiden und den oder die doppelwandigen Überstände als Gastasche zur Aufnahme des bei der erstmaligen Inbetriebnahme aus dem Elektrodenstapel austretenden Gases zu nutzen.

In diesem Fall werden die gegenüberliegenden Eckfeldhälften der als Gastaschen dienenden Überstände so miteinander verschweißt, dass zwischen den Innenseiten ein nach außen geschlossener und zum Elektrodenstapel hin offener Hohlraum geschaffen wird. Das Verschweißen erfolgt zweckmäßig entlang von einer Siegelnaht, die teilweise um den Hohlraum herum verläuft, wobei sie an der zum Elektrodenstapel benachbarten Seite des Überstandes eine Unterbrechung aufweist.

Nach der erstmaligen Inbetriebnahme der Batteriezelle wird der als Gastasche dienende Hohlraum entlang der benachbarten Kante des Elektrodenstapels durch eine durchgehende Siegelnaht zum Elektrodenstapel hin verschlossen und dann der Rest des Überstands jenseits der Siegelnaht abgetrennt.

Vorzugsweise werden die beschnittenen Überstände so gegen die Seitenwandteile der Umhüllung gefaltet, dass sie paarweise von entgegengesetzten Seiten her gegen zwei entgegengesetzte Seitenwandteile anliegen, was das Stapeln der Batteriezellen erleichtert. Zu diesem Zweck ist vorteilhaft auch die Breite der Überstände kleiner als die halbe Breite der benachbarten Seitenwandteile auszuführen, so dass sich die beiden von entgegengesetzten Seiten her gegen ein Seitenwandteil anliegenden Überstände nicht überlappen.

Grundsätzlich können die doppellagigen Überstände gegen diejenigen Seitenwandteile der Umhüllung gefaltet werden, welche den Breitseiten der beiden entgegengesetzten äußeren Elektroden des Elektrodenstapels gegenüberliegen. Da die doppelwandigen Überstande diese Seitenwandteile jedoch nicht ganz bedecken, würde dies beim Stapeln der Batteriezellen zu einer ungleichmäßigen Kraftverteilung führen. Aus diesem Grund werden die doppellagigen Überstände vorteilhaft gegen diejenigen Seitenwandteile der Umhüllung gefaltet, die entgegengesetzten Stirnseiten der Elektroden gegenüberliegen.

Nach dem Formen des Behälters und nach dem Einsetzen des Elektrodenstapels in den Behälter ragen die zwei Anschlussfahnen im Abstand nebeneinander aus dem offenen Ende des Behälters heraus. Um das Verschließen des offenen Endes des Behälters zu erleichtern und jeglichen elektrischen Kontakt zwischen dem Aluminium der Aluminium-Verbundfolie und den metallischen Anschlussfahnen zu verhindern und einen gasdichten Verschluss des Behälters zu ermöglichen, werden die Anschlussfahnen vor dem Einsetzen des Elektrodenstapels in den Behälter mit einer Schmelzumhüllung versehen, die beim Verschließen des offenen Endes des Behälters mit der Innenseite der Umhüllung verschmolzen wird.

Zum Verschließen des offenen Endes des Behälters werden bevorzugt Teile der Umhüllung von entgegengesetzten Seiten her mit ihren thermoplastischen Innenseiten gegeneinander und gegen die Schmelzumhüllung der Anschlussfahnen angepresst und durch Wärmezufuhr von außen entlang von mindestens einer Quersiegelnaht miteinander und mit der Schmelzumhüllung der Anschlussfahnen verschweißt. Die Quersiegelnaht erstreckt sich über die gesamte Breite des offenen Endes der Umhüllung und überlappt die senkrecht zur Quersiegelnaht ausgerichteten Siegelnähte aller vier seitlichen Überstände, so dass der Behälter durch die Quersiegelnaht dicht verschlossen wird.

Wenn der Elektrodenstapel nur aus einem Paar von Elektroden oder wenigen Elektrodenpaaren besteht, sind die Quersiegelnaht und die Schmelzumhüllungen der Anschlussfahnen zweckmäßig in der Nähe von derjenigen Stapelseite angeordnet, über welche die Anschlussfahnen überstehen, um den Überstand der Umhüllung über diese Stapelseite zu minimieren.

Wenn der Elektrodenstapel jedoch eine größere Anzahl von Elektroden umfasst, weist der Überstand der Umhüllung über diese Stapelseite jedoch zweckmäßig größere Abmessungen auf und kann giebelartig geformt sein, um zwischen dieser Stapelseite und der Umhüllung Platz für Ableiterfahnen zu schaffen, welche die negativen Elektroden mit der negativen Anschlussfahne und die positiven Elektroden mit der positiven Anschlussfahne verbinden.

An der Stapelseite mit den Anschlussfahnen erstreckt sich der Überstand der Umhüllung zweckmäßig entlang der Mitte dieser Stapelseite. Die an die benachbarten Seitenwandteile angrenzenden Teile dieses Überstandes sind zweckmäßig zum Teil gegen die Stapelseite und zum Teil übereinander gefaltet, damit die Umhüllung auch hier so weit wie möglich eng gegen den Elektrodenstapel anliegt.

Im Folgenden wird die Erfindung anhand eines in der Zeichnung dargestellten Ausführungsbeispiels näher beschrieben.
Fig. 1 zeigt eine perspektivische Ansicht einer erfindungsgemäßen Batteriezelle;
Fig. 2 zeigt eine Draufsicht auf einen Zuschnitt einer faltbaren Aluminium-Verbundfolie zur Herstellung einer Umhüllung der Batteriezelle;
Fig. 3 zeigt eine auseinandergezogene perspektivische Ansicht eines aus dem Zuschnitt gefalteten einseitig offenen Behälters und eines Elektrodenstapels der Batteriezelle vor dem Einsetzen in den Behälter;
Fig. 4 zeigt eine andere perspektivische Ansicht des einseitig offenen Behälters, nachdem der Elektrodenstapel teilweise in diesen eingesetzt worden ist;
Fig. 5 zeigt eine andere perspektivische Ansicht des einseitig offenen Behälters, nachdem der Elektrodenstapel ganz in diesen eingesetzt worden ist, sowie mit vier Siegelnähten entlang von vier parallelen Kanten des Elektrodenstapels;
Fig. 6 zeigt eine perspektivische Ansicht der Batteriezelle nach dem Verschließen des einseitig offenen Behälters durch eine Quersiegelnaht;
Fig. 7 zeigt eine Seitenansicht der Batteriezelle nach dem Verschließen des einseitig offenen Behälters durch eine Quersiegelnaht;
Fig. 8 zeigt eine perspektivische Ansicht der Batteriezelle nach dem Beschneiden der Umhüllung jenseits der vier Siegelnähte.

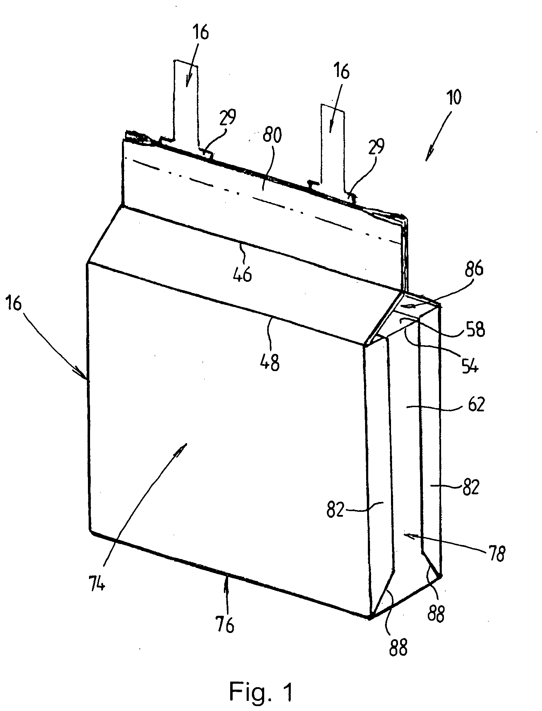

Bei der in Fig. 1 der Zeichnung dargestellten Batteriezelle 10 handelt es sich um eine Lithium-Ionen-Zelle, die einen von einer Umhüllung 12 aus einer flexiblen Aluminium-Verbundfolie umschlossenen Elektrodenstapel 14 (in Fig. 1 nicht sichtbar) und zwei Stromableiterkontakte in Form von Anschlussfahnen 16 aufweist.

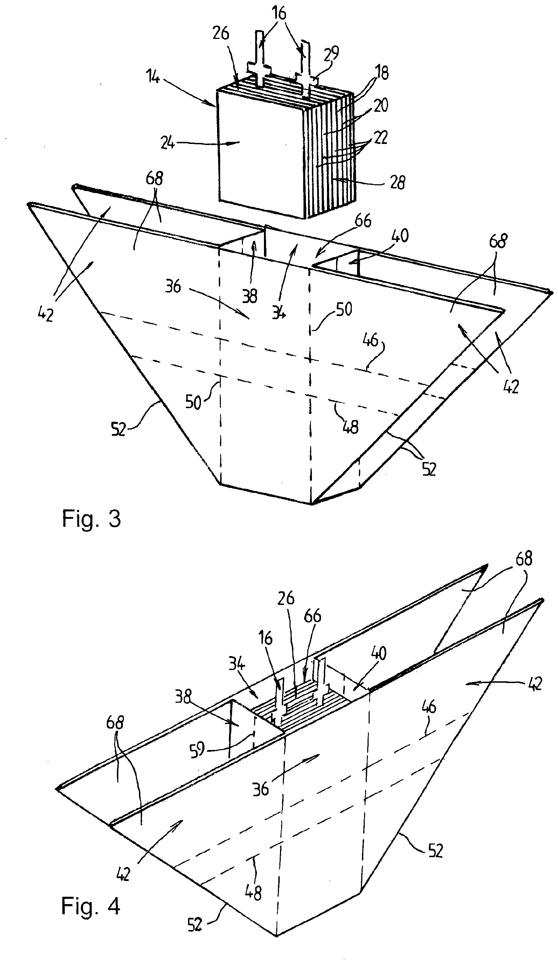

Wie in Fig. 3 schematisch dargestellt, besteht der Elektrodenstapel 14 aus mehreren abwechselnd übereinander gestapelten negativen und positiven Elektroden 18, 20 sowie Separatoren 22, die jeweils zwischen zwei benachbarten Elektroden 18, 20 angeordnet sind. Die negativen und positiven Elektroden 18, 20 sowie die Separatoren 22 haben jeweils zwei entgegengesetzte Breitseitenflächen und einen rechteckigen Umriss und liegen innerhalb des Elektrodenstapels 14 im Wesentlichen deckungsgleich übereinander, so dass der Stapel 14 sechs paarweise entgegengesetzte rechteckige Stapelseiten 24, 24, 26, 26, 28, 28 besitzt. Die erste und die entgegengesetzte zweite Stapelseite 24, 24 werden von den Breitseiten der beiden äußersten Elektroden 18, 20 gebildet. Die dritte und die entgegengesetzte vierte Stapelseite 26, 26 werden von fluchtenden Längsseiten der Elektroden 18, 20 und Separatoren 22 gebildet. Die fünfte und die entgegengesetzte sechste Stapelseite 28, 28 werden von fluchtenden Stirnseiten der Elektroden 18, 20 und Separatoren 22 gebildet.

Die beiden flachen zungenförmigen Anschlussfahnen 16 stehen nebeneinander über die dritte Stapelseite 26 über und ragen in einer Ebene aus der Umhüllung 12 heraus. Jede der beiden Anschlussfahnen 16 ist durch mehrere Ableiterfahnen (nicht dargestellt) mit den negativen Elektroden 18 bzw. mit den positiven Elektroden 20 des Elektrodenstapels 14 verbunden. Jede Anschlussfahne 16 ist mit einer flachen Schmelzumhüllung 29 aus einem thermoplastischen Material versehen, die einen Kontakt zwischen der aus Metall bestehenden Anschlussfahne 16 und dem Aluminium der Aluminium-Verbundfolie verhindern soll.

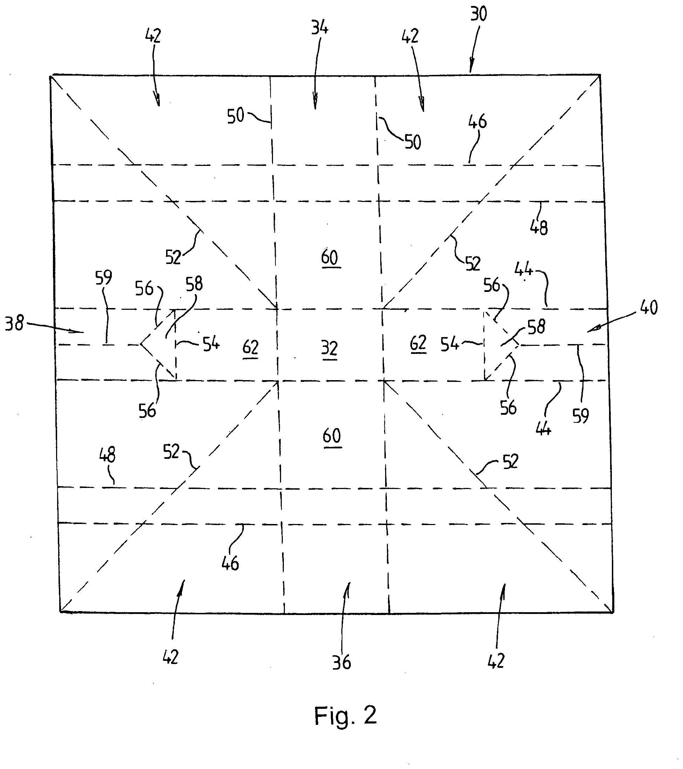

Die Umhüllung 12 ist aus einem einzigen ebenen rechteckigen Zuschnitt 30 (Fig. 2) der Aluminium-Verbundfolie hergestellt. Diese besteht aus mindestens drei Schichten, nämlich einer an der Innenseite angeordneten Schicht aus einem thermoplastischen Kunststoff, z.B. Polypropylen (PP) oder Polyethylen (PE), einer mittleren Schicht aus Aluminium und einer äußeren Schicht aus Polyethylenterephthalat (PET). Die Abmessungen des Zuschnitts 30 hängen von den Abmessungen des Elektrodenstapels 14 ab.

Wie in Fig. 2 in Draufsicht dargestellt, weist der Zuschnitt 30 mehrere von Falzlinien begrenzte Felder auf. Die Felder umfassen ein rechteckiges mittleres Feld 32, zwei an entgegengesetzte Längsseitenränder des mittleren Feldes 32 angrenzende rechteckige Seitenfelder 34, 36, zwei an entgegengesetzte Schmalseitenränder des mittleren Feldes 32 angrenzende rechteckige Seitenfelder 38, 40, sowie vier quadratische Eckfelder 42, die jeweils mit einer Ecke an eine der Ecken des mittleren Feldes 32 anstoßen.

Die Falzlinien werden beim Ausstanzen oder nach dem Konfektionieren des Zuschnitts 30 von dessen Innenseite her in den Zuschnitt 30 eingeprägt und umfassen zwei parallele Falzlinien 44, die entlang der Längsseitenränder des mittleren Feldes 32 über die gesamte Länge des Zuschnitts 30 verlaufen, zwei Paare von Falzlinien 46, 48, die parallel zueinander und zu den Falzlinien 44 bzw. zu den Längsseitenrändern des mittleren Feldes 32 ebenfalls über die gesamte Länge des Zuschnitts 30 verlaufen, zwei parallele Falzlinien 50, die entlang der Schmalseitenränder des mittleren Feldes 32 über die gesamte Breite des Zuschnitts 30 verlaufen, vier Falzlinien 52, die unter einem Winkel von 45 Grad zu den Falzlinien 44, 50 von jeder der vier Ecken des mittleren Feldes 32 zur benachbarten Ecke des Zuschnitts 30 verlaufen, zwei kurze Falzlinien 54, die parallel zu den Schmalseitenrändern des mittleren Feldes 32 zwischen den Falzlinien 44 verlaufen und diese verbinden, jeweils ein Paar Falzlinien 56, die von den Enden der Falzlinien 54 aus nach außen zu konvergieren und innerhalb der Seitenfelder 38, 40 ein rechtwinkliges Dreieck 58 begrenzen, sowie zwei Falzlinien 59, die jeweils von der Spitze des rechtwinkligen Dreiecks 58 zum benachbarten Rand des Zuschnitts 30 verlaufen.

Die Abstände der Paare von Falzlinien 44 und 50 sind so gewählt, dass die Abmessungen des mittleren Feldes 32 den Abmessungen der dritten und der vierten Stapelseite 26, 26 entsprechen, dass die Abmessungen eines an das mittlere Feld 32 angrenzenden und von der benachbarten Falzlinie 48 begrenzten inneren Teils 60 der beiden Seitenfelder 34, 36 den Abmessungen der Breitseiten der Elektroden 18, 20 sowie der ersten und der zweiten Stapelseite 24, 24 entsprechen, und dass die Abmessungen eines an den Schmalseitenrändern an das mittlere Feld 32 angrenzenden und von der Falzlinie 54 begrenzten inneren Teils 62 der beiden Seitenfelder 38, 40 den Abmessungen der fünften und der sechsten Stapelseite 28, 28 entsprechen. Die Abmessungen des Zuschnitts 30 sind so gewählt bzw. an die Abstände der Paare von Falzlinien 44 und 50 angepasst, dass die Eckfelder 42 einen quadratischen Umriss besitzen.

Wenn der Elektrodenstapel 14 mit der zu den Anschlussfahnen 16 entgegengesetzten vierten Stapelseite 26 auf die Innenseite des rechteckigen mittleren Feldes 32 gestellt und dann die beiden Paare von entgegengesetzten Seitenfeldern 34, 36; 38, 40 entlang der Längsseitenränder und der Schmalseitenränder des mittleren Feldes 32 bis zur Anlage gegen die jeweils gegenüberliegende Stapelseite 24, 24 bzw. 28, 28 im rechten Winkel nach oben umgeschlagen werden, hat dies zur Folge, dass das mittlere Feld 32 und die an das mittlere Feld 32 angrenzenden Teile 60, 62 der vier ebenen Seitenfelder 34, 36, 38, 40 mit ihren Innenseiten flächig gegen die jeweils gegenüberliegende ebene Stapelseite 24, 24, 28, 28 anliegen, wobei ihre Abmessungen den Abmessungen der gegenüberliegenden Stapelseite 24, 24, 28, 28 entsprechen.

In diesem Zustand bildet der Zuschnitt 30 einen nach oben bzw. einseitig offenen Behälter 64 (Fig. 3, 4 und 5), der in seiner Mitte eine zur Aufnahme des Elektrodenstapels 14 dienende, vom mittleren Feld 32 und von den Seitenfeldern 34, 36, 38, 40 begrenzte quaderförmige Ausnehmung 66 aufweist. Die vier quadratischen Eckfelder 42 sind jeweils entlang der diagonalen Falzlinien 52 hälftig aufeinander umgeschlagen und bilden dreieckige doppellagige Überstände 68, die vom Elektrodenstapel 14 weg über dessen zu den Stapelseiten 26 senkrechte Kanten nach außen überstehen. Die Überstände 68 können paarweise parallel ausgerichtet sein, wie in Fig. 3, 4 und 5 dargestellt.

Zum Formen des Behälters 64 wird der Zuschnitt 30 vorzugsweise von oben her mittels eines Stempels durch einen nach oben und unten offenen Schacht (nicht dargestellt) gedrückt, wobei die Seitenfelder 34, 36, 38, 40 aufgerichtet werden. An den vier Ecken des Schachtes befinden sich vertikale Schlitze, die zur Aufnahme der Überstände dienen und sich nach oben zu erweitern. Die Schlitze können paarweise parallel ausgerichtet sein, um die Überstände paarweise parallel auszurichten. Der Stempel kann röhrenförmig, nach unten offen und nach oben teilweise geschlossen sein, so dass der Stempel vor dem Einführen in den Schacht von unten her mit dem Elektrodenstapel bestückt und der Elektrodenstapel wieder nach unten aus dem Stempel herausgedrückt werden kann. Auf diese Weise kann der Elektrodenstapel im Behälter 64 zurückgehalten werden, wenn der Stempel nach oben aus dem Schacht heraus gezogen wird.

Im Bereich der Überstände 68 liegen sich die beiden dreieckigen Hälften der Eckfelder 42 jeweils deckungsgleich gegenüber. Die gegenüberliegenden Hälften können entweder innerhalb der vertikalen Schlitze des Schachts oder nach dem Hindurchtritt durch den Schacht von außen her zusammengedrückt und dabei entlang von vorbestimmten Siegelnähten erwärmt werden, um dort ihre thermoplastischen Innenseiten miteinander zu verschmelzen.

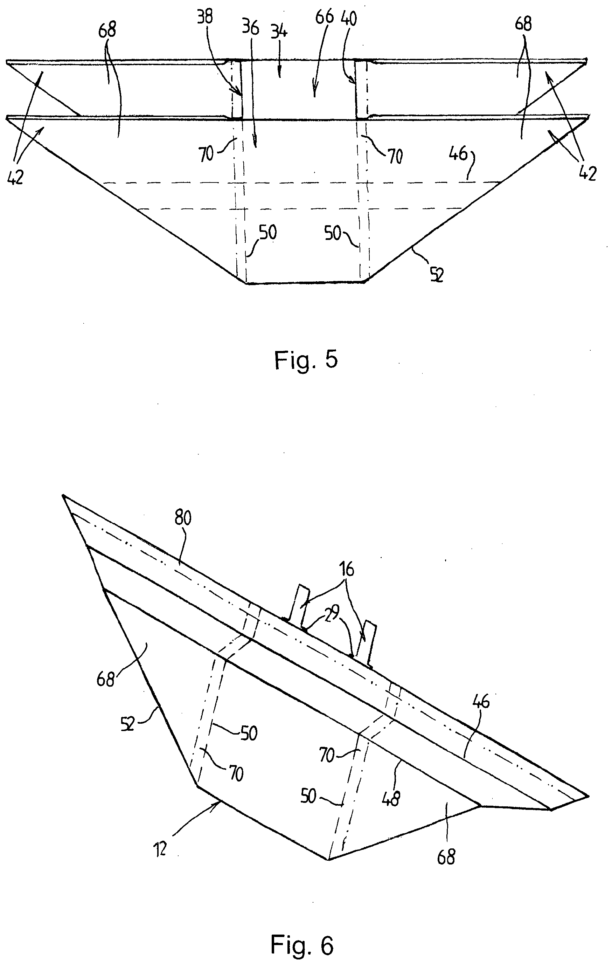

Bei dem in Fig. 5 dargestellten Behälter 64 sind vier gerade schmale streifenförmige Siegelnähte 70 vorhanden, die von den Ecken des mittleren Feldes 32 aus entlang der Falzlinien 44 und 50 bzw. entlang der vier zu den Stapelseiten 26, 26 senkrechten Kanten des Elektrodenstapels 14 bis zum äußeren Rand des Zuschnitts 30 verlaufen. Die äußeren Begrenzungen dieser vier Siegelnähte 70 sind in der Zeichnung durch einstrichpunktierte Linien angezeigt.

Jedoch kann alternativ zwischen den Innenseiten von zwei gegenüberliegenden Eckfeldhälften von einem oder mehreren doppellagigen Überständen 68 ein Hohlraum gebildet werden, der bei der erstmaligen Inbetriebnahme der fertigen Batteriezelle 10 als Gastasche zur Aufnahme von Gas dienen kann, das während der Inbetriebnahme aus dem Elektrodenstapel 14 austritt. In diesem Fall wird dort vorerst die Siegelnaht 70 entlang von einem der Ränder des inneren Teils 60 des Seitenfeldes 34 oder 36 entweder ganz weggelassen oder mit einer Unterbrechung versehen, während die Innenseiten der gegenüberliegenden Eckfeldhälften der als Gastasche dienenden Überstände 68 entlang von einer neben der Falzlinie 48 zwischen den Falzlinien 50 und 52 verlaufenden Siegelnaht (nicht dargestellt) durchgehend miteinander verschmolzen werden. Dadurch kann der Hohlraum zwischen den beiden Eckfeldhälften einerseits mit dem Elektrodenstapel 14 bzw. dem Inneren der Umhüllung kommunizieren, jedoch andererseits ein Austritt des Gases aus dem Hohlraum der Gastasche verhindert werden. Nach der Inbetriebnahme und dem Absaugen des Gases aus dem Hohlraum kann der jeweilige Überstand 68 entlang der benachbarten Kante des Elektrodenstapels mit einer durchgehenden Siegelnaht 70 versehen werden, wie zuvor beschrieben, um den Hohlraum zum Elektrodenstapel 14 hin zu verschließen.

In beiden Fällen wird der Behälter 64 anschließend mit einem flüssigen Elektrolyten befüllt, bevor danach das offene obere Ende des Behälters 64 bzw. die Umhüllung 12 am oberen Ende des Behälters 64 verschlossen wird. Dazu werden zuerst die beiden dreieckigen Felder 58 des Zuschnitts 30 von entgegengesetzten Seiten her nach innen gefaltet, bis sie gegen die obere Stapelseite 26 anliegen. Anschließend werden die äußeren Teile der Seitenfelder 34 und 36 und diejenigen Teile der Eckfelder jenseits der Falzlinien 48 aufeinander zu bewegt und dabei entlang der der Falzlinien 46 und 48 gefaltet, wobei sich die beiden Hälften von jedem der Seitenfelder 38 und 40 jenseits der dreieckigen Felder 58 und beiderseits der Falzlinien 59 mit ihren Außenseiten gegeneinander anlegen. Anschließend werden die äußeren Teile der Seitenfelder 34 und 36 und diejenigen Teile der Eckfelder jenseits der Falzlinien 48 von entgegengesetzten Seiten her gegeneinander und gegen die Schmelzumhüllungen 29 der Anschlussfahnen 16 gedrückt und entlang von einer Quersiegelnaht 80 miteinander und mit den Schmelzumhüllungen 29 der Anschlussfahnen 16 verschweißt. Die beiden äußeren Begrenzungen der Quersiegelnaht 80 sind in der Zeichnung durch zweistrichpunktierte Linien angezeigt. Die Quersiegelnaht 80 verläuft über die vier Siegelnähe 70 hinweg, wie am besten in Fig. 6 dargestellt.

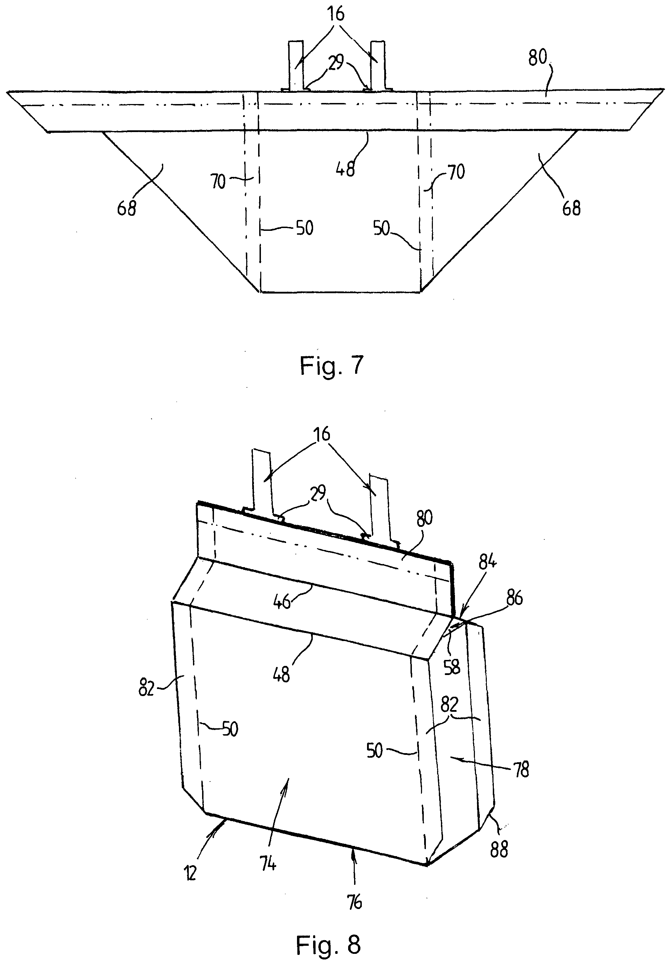

Nach der Herstellung der Quersiegelnaht 80 besitzen die teilweise fertiggestellten verschlossenen Batteriezellen 10 die in Fig. 6 und 7 dargestellte Gestalt. Die beiden Anschlussfahnen 16 ragen im Abstand voneinander aus der Umhüllung 12 heraus. Die Umhüllung 12 ist nun vollständig geschlossen.

Wenn keiner der Überstände 68 als Gastasche genutzt werden soll, werden die Überstände 68 nunmehr jenseits der Siegelnähte 70 entlang der einstrichpunktierten Linien abgetrennt. Dabei erhält die Batteriezelle 10 die in Fig. 8 dargestellte Gestalt, bei der ein unterer Seitenwandteil 76 der Umhüllung 12 vom mittleren Feld 32, zwei entgegengesetzte Seitenwandteile 74 an den Breitseiten von den inneren Teilen 60 der Seitenfelder 34, 36 und zwei entgegengesetzte Seitenwandteile 78 an den Stirnseiten von den inneren Teilen 62 der Seitenfelder 38, 40 gebildet werden. Die Reste der Überstände 68 besitzen die Form von schmalen, über die Seitenwandteile 78 überstehenden Streifen 82, deren obere Enden im Bereich des restlichen Überstandes 78 oberhalb von den Falzlinien 46 paarweise gegeneinander anliegen und zwischen den benachbarten Falzlinien 46 und 48 einen giebelartigen Vorsprung 84 bilden. Unterhalb und einwärts von dem giebelartigen Vorsprung 84 befindet sich eine im Querschnitt dreieckige Vertiefung 86, die nach unten zu durch eines der rechtwinkligen Dreiecke 58 des Zuschnitts 30 und nach oben zu durch angrenzende Teile der Seitenfelder 34 und 36 begrenzt wird.

Zur Fertigstellung der in Fig. 1 dargestellten Batteriezelle 10 werden die schmalen Streifen 82 von entgegengesetzten Seiten her gegen die Seitenwandteile 78 gefaltet. Wie man in Fig. 1 sieht, ist die Breite der Streifen 82 kleiner als die halbe Breite der Seitenwandteile 78, so dass sich die beiden Streifen 82 auf jedem Seitenwandteil 78 nicht überlappen. Die Streifen 82 werden am unteren Ende jeweils von einer schrägen Kante 88 begrenzt, die von einem kurzen Abschnitt einer Falzlinie 52 gebildet wird. Die oberen Enden der Streifen 80 werden in die im Querschnitt dreieckige Vertiefung 86 hinein gefaltet, wo sie teilweise von oben her gegen eines der rechtwinkligen Dreiecke 58 des Zuschnitts 30 und von unten her gegen angrenzende Teile der Seitenfelder 34 und 36 anliegen.

## Patentansprüche

1. Batteriezelle (10), mit einer Mehrzahl von Elektroden (18, 20), die einen quaderförmigen Elektrodenstapel (14) bilden, einer den Elektrodenstapel (14) umgebenden, aus einem einzigen ebenen Zuschnitt (30) einer Aluminium-Verbundfolie gefalteten Umhüllung (12), sowie zwei Anschlussfahnen (16), die über eine (26) von sechs paarweise entgegengesetzten Stapelseiten (24, 24, 26, 26, 28, 28) des Elektrodenstapels (14) überstehen und nebeneinander aus der Umhüllung (12) ragen, wobei mindestens gegen einen Teil der sechs Stapelseiten (24, 24, 26, 26, 28, 28) ein einziger ebener rechteckiger Seitenwandteil (74, 74, 76, 78, 78) der Umhüllung (12) anliegt, dessen Abmessungen den Abmessungen der gegenüberliegenden Stapelseite (24, 24, 26, 28, 28) entsprechen, **dadurch gekennzeichnet, dass** gegen fünf (24, 24, 26, 28, 28) der sechs Stapelseiten (24, 24, 26, 26, 28, 28) jeweils ein einziger ebener rechteckiger Seitenwandteil (74, 74, 76, 78, 78) der Umhüllung (12) anliegt, dessen Abmessungen den Abmessungen der gegenüberliegenden Stapelseite (24, 24, 26, 28, 28) entsprechen.

2. Batteriezelle (10) nach Anspruch 1, **dadurch gekennzeichnet, dass** über die Innenflächen der fünf ebenen rechteckigen Seitenwandteile (74, 74, 76, 78, 78) der Umhüllung (12) keine Siegelnähte verlaufen.

3. Batteriezelle (10) nach Anspruch 1 oder 2, **dadurch gekennzeichnet, dass** der Zuschnitt (30) fünf kreuzförmig angeordnete ebene rechteckige Felder (32, 34, 36, 38, 40) aufweist, welche die fünf Seitenwandteile (76, 74, 74, 78, 78) bilden.

4. Batteriezelle (10) nach einem der vorangehenden Ansprüche, **dadurch gekennzeichnet, dass** zwischen jeweils benachbarten Seitenwandteilen (74, 78) doppellagige Überstände (68, 82) aus Teilen (42) des Folienzuschnitts (30) angeordnet sind, deren Innenseiten entlang von Siegelnähten (70) miteinander verschweißt sind.

5. Batteriezelle (10) nach Anspruch 4, **dadurch gekennzeichnet, dass** sich die Überstände (82) entlang von vier parallelen Kanten des Elektrodenstapels (14) erstrecken und jeweils gegen einen benachbarten Seitenwandteil (74, 78) der Umhüllung (12) gefaltet sind.

6. Batteriezelle (10) nach Anspruch 4 oder 5, **dadurch gekennzeichnet, dass** die Überstände (82) jeweils paarweise von entgegengesetzten Seiten her gegen zwei entgegengesetzte Seitenwandteile (74; 78) anliegen.

7. Batteriezelle (10) nach Anspruch 5 oder 6, **dadurch gekennzeichnet, dass** die Breite der Überstände (82) kleiner als die halbe Breite der Seitenwandteile (74; 78) ist.

8. Batteriezelle (10) nach einem der Ansprüche 4 bis 7, **dadurch gekennzeichnet, dass** jeder der Überstände (82) an einem Ende von einem Abschnitt einer Falzlinie (52) des Folienzuschnitts (30) begrenzt wird.

9. Batteriezelle (10) nach einem der vorangehenden Ansprüche, **dadurch gekennzeichnet, dass** gegenüberliegende Teile der Umhüllung (12) von entgegengesetzten Seiten her gegeneinander und gegen Schmelzumhüllungen (29) der Anschlussfahnen (16) anliegen und entlang von mindestens einer Quersiegelnaht (80) miteinander und mit den Schmelzumhüllungen (29) verschweißt sind.

10. Batteriezelle (10) nach Anspruch 9, rückbezogen auf Anspruch 4, **dadurch gekennzeichnet, dass** die mindestens eine Quersiegelnaht (80) die Siegelnähte (70) aller vier Überstände (68, 82) überlappt.

11. Verfahren zur Herstellung einer Batteriezelle (10) mit einer Mehrzahl von Elektroden (18, 20), die zu einem quaderförmigen Elektrodenstapel (14) mit sechs paarweise entgegengesetzten Stapelseiten (24, 24, 26, 26, 28, 28) sowie zwei über eine der Stapelseiten (26) überstehenden Anschlussfahnen (16, 16) gestapelt werden, wobei der Elektrodenstapel (14) mit einer Umhüllung (12) aus einem einzigen ebenen Zuschnitt (30) einer Aluminium-Verbundfolie versehen wird, wobei der Zuschnitt (30) durch Falten zu einem den Elektrodenstapel (14) aufnehmenden einseitig offenen Behälter (64) geformt wird, und wobei der Behälter (64) nach dem Einsetzen des Elektrodenstapels (14) verschlossen wird, **dadurch gekennzeichnet, dass** beim Formen des Behälters (64) gegenüber von fünf (24, 24, 26, 28, 28) der sechs Stapelseiten (24, 24, 26, 26, 28, 28) jeweils ein einziger ebener rechteckiger Seitenwandteil (74, 74, 76, 78, 78) der Umhüllung angeordnet (14) wird, dessen Abmessungen nach der Fertigstellung der Batteriezelle (10) den Abmessungen der gegenüberliegenden Stapelseite (24, 24, 26, 28, 28) entsprechen.

12. Verfahren nach Anspruch 11, **dadurch gekennzeichnet, dass** der Folienzuschnitt (30) zum Formen des Behälters (64) in oder durch einen Schacht gedrückt wird, wobei vier (74, 74, 78, 78) der fünf Seitenwandteile (74, 74, 76, 78, 78) aufgerichtet werden.

13. Verfahren nach Anspruch 12, **dadurch gekennzeichnet, dass** der Elektrodenstapel (14) mit in den Schacht eingeführt wird, um ihn während des Formens des Behälters (64) in diesen einzusetzen.

14. Verfahren nach einem der Ansprüche 11 bis 13, **dadurch gekennzeichnet, dass** beim Formen des Behälters (64) zwischen benachbarten Seitenwandteilen (74, 74, 76, 78, 78) doppellagige Überstände (68) aus übereinanderliegenden Teilen (42) des Folienzuschnitts (30) gebildet werden, die später an ihren Innenseiten entlang von Siegelnähten (70) miteinander verschweißt werden.

15. Verfahren nach Anspruch 14, **dadurch gekennzeichnet, dass** mindestens einer der doppellagigen Überstände (68) einen mindestens teilweise von einer Siegelnaht umgebenen, zur Umgebung hin geschlossenen und zum Behälter (64) hin offenen Hohlraum umschließt, der während einer erstmaligen Inbetriebnahme der Batteriezelle (10) als Gastasche zur Aufnahme von austretendem Gas verwendet wird.
